(19) Europäisches Patentamt
European Patent Office
Office européen des brevets

(11) **EP 2 344 331 B1**

(12) **FASCICULE DE BREVET EUROPEEN**

(45) Date de publication et mention de la délivrance du brevet:
**14.09.2016 Bulletin 2016/37**

(21) Numéro de dépôt: **09752433.4**

(22) Date de dépôt: **30.09.2009**

(51) Int Cl.:
*B32B 17/10* (2006.01)     *C03C 27/12* (2006.01)
*G01N 3/32* (2006.01)

(86) Numéro de dépôt international:
**PCT/FR2009/051860**

(87) Numéro de publication internationale:
**WO 2010/037973 (08.04.2010 Gazette 2010/14)**

(54) **PROCEDE DE FABRICATION D'UN VITRAGE FEUILLETE**

VERFAHREN ZUR HERSTELLUNG EINER VERBUNDVERGLASUNG

PROCESS FOR MANUFACTURING A LAMINATED GLAZING

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **01.10.2008 FR 0856642**

(43) Date de publication de la demande:
**20.07.2011 Bulletin 2011/29**

(73) Titulaire: **Saint-Gobain Glass France
92400 Courbevoie (FR)**

(72) Inventeurs:
• **DECOURCELLE, Romain
F-60200 Compiegne (FR)**
• **LEVASSEUR, Fabien
F-60150 Longueil-Annel (FR)**
• **NUGUE, Jean-Clément
F-60260 Lamorlaye (FR)**

(74) Mandataire: **Bregal, Laurence
Saint-Gobain Recherche
Département Propriété Industrielle
39, quai Lucien Lefranc
93300 Aubervilliers (FR)**

(56) Documents cités:
EP-A- 0 844 075     WO-A-03/053688
WO-A-2007/135317     FR-A- 2 616 908
FR-A1- 2 875 182     US-B1- 6 432 522

**Description**

La présente invention est relative à un procédé de fabrication d'un vitrage feuilleté, incorporant un intercalaire de feuilletage dont le coefficient de transfert au cisaillement a été optimisé.

Selon un autre aspect invention, elle vise également un vitrage feuilleté incorporant ce type d'intercalaire optimisé.

On sait que les lois de comportement viscoélastique des intercalaires de feuilletage destinés à la fabrication de vitrages feuilletés influent sur le comportement mécanique de ces vitrages feuilletés lorsqu'ils sont soumis à une charge statique ou quasi-statique.

La combinaison de l'intensité de ces charges, de leur mode de répartition, de leur temps d'application et de la température d'application aux différents états limites, qui sont appliquées au vitrage, permettent de déterminer les caractéristiques structurelles (nature, composition, épaisseur...) de l'intercalaire à utiliser dans l'assemblage du vitrage feuilleté.

A ce jour, la détermination des caractéristiques structurelles de l'intercalaire de feuilletage devant être utilisé dans la fabrication du vitrage feuilleté résulte d'un modèle analytique prenant en compte l'épaisseur équivalente $e_q$ d'un vitrage théorique sans l'intercalaire, suivant l'équation suivante

$$e_q = \sqrt[3]{(1-\omega)(\sum_{i=1}^{n} e_i^3) + \omega(\sum_{i=1}^{n} e_i)^3}$$

, où

$\omega$ : coefficient de transfert, qui caractérise la participation effective de l'intercalaire au transfert du cisaillement entre les composants verriers de l'assemblage feuilleté, qui vaut 0 si l'intercalaire n'apporte aucune contribution aux performances mécaniques de l'assemblage constitué par le vitrage feuilleté, ou au contraire une valeur qui tend vers 1 si l'intercalaire apporte une contribution aux performances mécaniques du vitrage feuilleté ;

$e_i$ : épaisseur de chaque substrat verrier du vitrage.

Aucune valeur du coefficient de transfert $\omega$ et aucune méthode permettant la détermination du coefficient de transfert $\omega$ ne sont disponibles dans la littérature.

Le cas limite $\omega = 0$ correspond à un intercalaire réalisant un glissement parfait entre les plis du vitrage, où il n'y a pas de transfert d'effort de cisaillement, alors que le cas limite $\omega$ tendant vers 1 correspond à une participation totale de l'intercalaire au transfert des efforts.

On cherche à déterminer le coefficient de transfert $\omega$ entre ces cas limites afin de déterminer des classes de performances pour les intercalaires feuilletés, à savoir des intercalaires dits « souples » qui ne réalisent que très peu ou pas de transfert d'effort de cisaillement, typiquement des intercalaires acoustiques, des intercalaires dits « structurants » qui réalisent un important transfert d'effort de cisaillement, et des intercalaires dits « standard » dont la capacité à transférer des efforts de cisaillement est située entre les deux domaines précédemment définis.

Les vitrages feuilletés utilisant des intercalaires non optimisés au niveau de leur facteur $\omega$ ne sont donc pas correctement dimensionnés, ce qui peut conduire à des défaillances mécaniques en cas de sollicitations non contrôlées.

La présente invention vise donc à pallier ces inconvénients en proposant un procédé de fabrication d'un vitrage feuilleté qui intègre au moins un intercalaire de feuilletage optimisé.

A cet effet, l'invention a pour objet un procédé de fabrication d'un vitrage feuilleté, dans lequel on interpose entre deux substrats à fonction verrière un intercalaire de feuilletage, tel qu'au préalable :

- on procède sur un échantillon dudit intercalaire à une mesure du module de Young E à l'aide d'un visco-analyseur en faisant varier la température et la fréquence en imposant un déplacement dynamique constant,
- on procède à un traitement numérique des courbes obtenues à l'aide des lois WLF (Williams, Landel, Ferry) pour établir une loi de comportement du matériau constituant ledit échantillon d'intercalaire à une température donnée,

- on réalise un modèle numérique basé sur une méthode des éléments finis en flexion d'une plaque du vitrage feuilleté, les propriétés mécaniques de l'échantillon résultant des étapes précédentes,
- on confronte les résultats du calcul numérique à ceux obtenus par des formules analytiques dans lesquelles la participation de l'intercalaire au transfert du cisaillement dans le vitrage feuilleté est représenté par un coefficient de transfert $\omega$,
- on fait varier le coefficient de transfert $\omega$ dans les formules analytiques jusqu'à convergence des résultats,
- on construit par itération successive une fonction de transfert $\omega = f(E)$, où $\omega$ est le coefficient de transfert et E le module de Young de l'intercalaire.

Grâce à cet intercalaire optimisé, le vitrage feuilleté intégrant ce dernier possède des propriétés mécaniques améliorées en rapport avec les sollicitations mécaniques auxquelles il est soumis.

Au sens de l'invention, un substrat à fonction verrière peut être un substrat en verre ou en plastique.

Dans des modes de réalisation préférés de l'invention, on peut éventuellement avoir recours en outre à l'une et/ou à l'autre des dispositions suivantes :

- on fait varier la température entre -20°C et 60 °C,
- on fait varier la fréquence entre $5.10^{-7}$ Hz et $3.10^{-1}$ Hz.

Selon un autre aspect, l'invention a également pour objet une gamme d'intercalaire pouvant être utilisée au sein d'un vitrage feuilleté ainsi fabriqué.

Un intercalaire est dit à fonction « structurante » si pour un temps de chargement au vent de 3s et pour une température d'utilisation comprise entre 0°C et 20°C on a

- à 0°C $E>8.10^8Pa$
- à 10°C $E>3.10^8Pa$
- à 20 °C $E>1.10^8Pa$.

Un intercalaire est dit à fonction « standard » si pour un temps de chargement au vent de 3s et pour une température d'utilisation comprise entre 0°C et 20°C on a

- à 0°C $E> 1.10^8$ Pa et $E \leq 8.10^8Pa$
- à 10°C $E>2.10^7Pa$ et $E \leq 3.10^8Pa$
- à 20 °C $E>5.10^6Pa$ et $E \leq 1.10^8Pa$.

Un intercalaire est dit à fonction « souple ou acoustique » si pour un temps de chargement au vent de 3s et pour une température d'utilisation comprise entre 0°C et 20°C on a

- à 0°C $E>1.10^7Pa$ et $E \leq 1.10^8Pa$
- à 10°C $E>3.10^6Pa$ et $E \leq 2.10^7Pa$
- à 20 °C $E>5.10^5Pa$ et $E \leq 5.10^6Pa$.

L'invention a également pour objet un vitrage feuilleté comprenant au moins un premier substrat à fonction verrière et un deuxième substrat à fonction verrière, ces substrats étant feuilletés à l'aide d'un intercalaire tel que décrit ci-dessus.

De plus, l'invention a pour objet un vitrage feuilleté comprenant au moins un premier substrat à fonction verrière et un deuxième substrat à fonction verrière entre lesquels est interposé un intercalaire de feuilletage, ce vitrage feuilleté étant fabriqué selon un procédé tel que décrit ci-dessus.

Les caractéristiques et avantages de l'invention apparaîtront dans la description qui va suivre d'un mode de réalisation d'un procédé de fabrication d'un vitrage feuilleté selon l'invention, donnée uniquement à titre d'exemple et faite en se référant aux dessins annexés dans lesquels :

- la figure 1 représente la courbe maîtresse à 20°C pour un intercalaire dit structurant, à savoir l'évolution du module de Young E à 20°C en fonction de la fréquence f, laquelle varie de $1.10^{-7}$ à $1.10^1$ Hz,
- la figure 2 donne un exemple de réalisation de la courbe représentative de la fonction de transfert, ou courbe de transfert, $\omega = f(E)$, où $\omega$ est le coefficient

de transfert et E le module de Young de l'intercalaire.

Selon un mode préféré de mise en oeuvre de l'invention, partant de deux substrats à fonction verrière que l'on veut assembler par une technique de feuilletage à l'aide d'un intercalaire de feuilletage, on réalise au préalable une caractérisation des paramètres mécaniques dudit intercalaire, à l'aide d'un visco-analyseur (VA400) commercialisé par la société Metravib.

Après avoir placé un échantillon dudit intercalaire dans ce visco-analyseur, on procède à une mesure du module de Young sur l'échantillon de l'intercalaire à l'aide du visco-analyseur en faisant varier la température et la fréquence en imposant un déplacement dynamique constant, notamment dans cet exemple $1.10^{-6}$m.

Ainsi, on a testé un échantillon d'intercalaire de marque « RM 11 » commercialisé par la société « Solutia », qui a donné, pour un chargement de 3s et à 20 °C, un module de Young $E=2.10^8$ Pa.

On procède ensuite à un traitement numériques des courbes obtenues à l'aide des lois WLF (Williams, Landel, Ferry) (Ferry JD, Viscoelastic properties of materials, Wiley (1980)) pour établir la loi de comportement E(f), c'est-à-dire l'évolution du module de Young E en fonction de la fréquence, du matériau constituant ledit échantillon d'intercalaire à une température donnée, cette température, ici 20°C, étant généralement appelée température maîtresse.

On réalise un modèle numérique basé sur une méthode des éléments finis en flexion d'une plaque du vitrage feuilleté, les propriétés mécaniques de l'échantillon résultant des étapes précédentes. Ce modèle numérique sera réalisé à l'aide du logiciel de calcul de la marque COSMOS-M dans lequel on aura intégré un modèle non-linéaire de plaque constituant un vitrage feuilleté incorporant l'intercalaire en question, avec des appuis simples sur chacun des côtés, et avec un chargement uniforme.

On confronte alors les résultats du calcul numérique à ceux obtenus par des formules analytiques dans lesquelles la participation de l'intercalaire au transfert du cisaillement dans le vitrage feuilleté est représenté par le coefficient de transfert $\omega$. De telles formules analytiques font l'objet de l'annexe B du projet de norme européenne prEN 13474. Ces formules analytiques font notamment intervenir l'épaisseur du vitrage, qui peut par exemple être donnée par l'équation suivante de l'épaisseur équivalente $e_q$ du vitrage feuilleté :

$$e_q = \sqrt[3]{(1-\omega)(\sum_{i=1}^n e_i^3) + \omega(\sum_{i=1}^n e_i)^3}$$

où $e_i$ est l'épaisseur de chaque substrat verrier du vitrage.

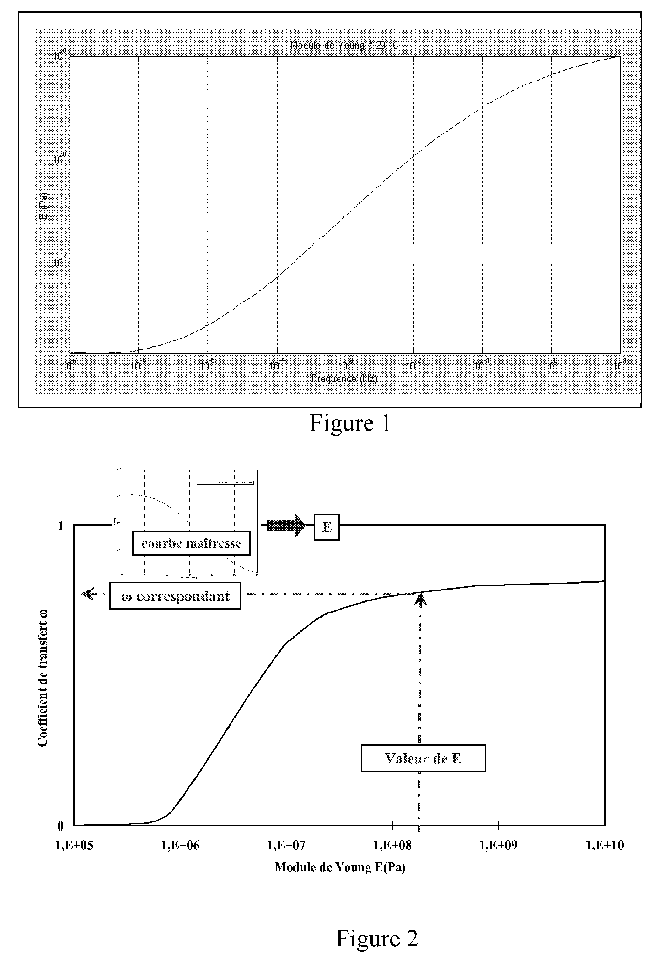

On fait varier le coefficient de transfert $\omega$ dans les formules analytiques jusqu'à convergence des résultats et on construit par itération successive une fonction

de transfert $\omega$ = f(E), dont un exemple de réalisation est donné en figure 2.

A partir de cette courbe, on a obtenu pour cet échantillon, à 20°C, et pour un chargement durant 3s, une valeur de $\omega$ =0, 7 ; dans ces conditions l'intercalaire peut être qualifié d'intercalaire dit « structurant ».

On a reproduit le procédé objet de l'invention, avec d'autres intercalaires de feuilletage, et on a obtenu :

- avec un intercalaire de la marque RB41, commercialisé par « SOLUTIA » à 20°C, vent 3s, E=9MPa, $\omega$ =0,4 ; dans ces conditions l'intercalaire peut être qualifié d'intercalaire dit « standard » ; et

- avec un intercalaire de la marque SC, commercialisé par « KEG » à 20°C, vent 3s, E =1MPa, $\omega$=0,1 ; dans ces conditions l'intercalaire peut être qualifié d'intercalaire dit « souple ou acoustique ».

A partir d'intercalaire de chacun de ces types, il est possible d'élaborer des vitrages feuilletés à partir de deux substrats S1 et S2 associés au niveau de l'une de leur face principale à l'aide de cet intercalaire.

## Revendications

**1.** Procédé de fabrication d'un vitrage feuilleté, dans lequel on interpose entre deux substrats à fonction verrière un intercalaire de feuilletage, **caractérisé en ce qu'**au préalable :

- on procède sur un échantillon dudit intercalaire à une mesure du module de Young E à l'aide d'un visco-analyseur en faisant varier la température et la fréquence en imposant un déplacement dynamique constant,

- on procède à un traitement numérique des courbes obtenues à l'aide des lois WLF (Williams, Landel, Ferry) pour établir une loi de comportement du matériau constituant ledit échantillon d'intercalaire à une température donnée,

- on réalise un modèle numérique basé sur une méthode des éléments finis en flexion d'une plaque du vitrage feuilleté, les propriétés mécaniques de l'échantillon résultant des étapes précédentes,

- on confronte les résultats du calcul numérique à ceux obtenus par des formules analytiques dans lesquelles la participation de l'intercalaire au transfert du cisaillement dans le vitrage feuilleté est représenté par un coefficient de transfert $\omega$,

- on fait varier le coefficient de transfert $\omega$ dans les formules analytiques jusqu'à convergence des résultats,

- on construit par itération successive une fonction de transfert $\omega$ = f(E), où $\omega$ est le coefficient

de transfert et E le module de Young de l'intercalaire.

**2.** Procédé de fabrication selon la revendication 1, **caractérisé en ce que** l'on fait varier la température entre -20°C et 60 °C.

**3.** Procédé de fabrication selon la revendication 1, **caractérisé en ce que** l'on fait varier la fréquence entre $5.10^{-7}$ Hz et $3.10^{-1}$ Hz.

**4.** Procédé de fabrication selon l'une quelconque des revendications 1 à 3, **caractérisé en ce que** l'intercalaire est dit à fonction « structurante » et tel que pour un temps de chargement au vent de 3s et pour une température d'utilisation comprise entre 0°C et 20°C on a

- à 0°C $E > 8.10^8 Pa$
- à 10°C $E > 3.10^8 Pa$
- à 20 °C $E > 1.10^8 Pa$

**5.** Procédé de fabrication selon l'une quelconque des revendications 1 à 3, **caractérisé en ce que** l'intercalaire est dit à fonction « standard » et tel que pour un temps de chargement au vent de 3s et pour une température d'utilisation comprise entre 0°C et 20°C on a

- à 0°C $E > 1.10^8 Pa$ et $E \leq 8.10^8 Pa$
- à 10°C $E > 2.10^7 Pa$ et $E \leq 3.10^8 Pa$
- à 20 °C $E > 5.10^6 Pa$ et $E \leq 1.10^8 Pa$.

**6.** Procédé de fabrication selon l'une quelconque des revendications 1 à 3, **caractérisé en ce que** l'intercalaire est dit à fonction « souple ou acoustique » et tel que pour un temps de chargement au vent de 3s et pour une température d'utilisation comprise entre 0°C et 20°C on a

- à 0°C $E > 1.10^7 Pa$ et $E \leq 1.10^8 Pa$
- à 10°C $E > 3.10^6 Pa$ et $E \leq 2.10^7 Pa$
- à 20 °C $E > 5.10^5 Pa$ et $E \leq 5.10^6 Pa$.

## Patentansprüche

**1.** Verfahren zur Herstellung einer Verbundverglasung, bei dem zwischen zwei Substraten mit Glasfunktion eine Laminierungszwischenschicht eingefügt wird, **dadurch gekennzeichnet, dass** im Vorfeld:

- an einer Probe der Zwischenschicht eine Messung des Elastizitätsmoduls E mit Hilfe eines Viskoanalysators unter Variieren der Temperatur und der Frequenz, indem eine konstante dynamische Bewegung auferlegt wird, vorgenommen wird,

- eine digitale Verarbeitung der erhaltenen Kurven mit Hilfe der WLF (Williams, Landel, Ferry)-Gleichungen vorgenommen wird, um einen Verhaltensverlauf des die Zwischenschichtprobe bildenden Materials bei einer gegebenen Temperatur zu erstellen,

- ein digitales Modell, das auf einer Methode der finiten Elemente basiert, unter Biegung einer Platte der Verbundverglasung hergestellt wird, wobei die mechanischen Eigenschaften der Probe aus den vorhergehenden Schritten hervorgehen,

- die Ergebnisse der digitalen Berechnung denjenigen gegenübergestellt werden, die durch analytische Formeln, bei denen die Beteiligung der Zwischenschicht an der Übertragung der Scherkraft in der Verbundverglasung durch einen Übertragungskoeffizienten $\omega$ dargestellt ist, erhalten werden,

- der Übertragungskoeffizient $\omega$ in den analytischen Formeln bis zur Konvergenz der Ergebnisse variiert wird,

- durch sukzessive Iteration eine Übertragungsfunktion $\omega = f(E)$ erzeugt wird, worin $\omega$ der Übertragungskoeffizient und E der Elastizitätsmodul der Zwischenschicht ist.

2. Herstellungsverfahren nach Anspruch 1, **dadurch gekennzeichnet, dass** die Temperatur zwischen -20 °C und 60 °C variiert wird.

3. Herstellungsverfahren nach Anspruch 1, **dadurch gekennzeichnet, dass** die Frequenz zwischen $5.10^{-7}$ Hz und $3.10^{-1}$ Hz variiert wird.

4. Herstellungsverfahren nach einem der Ansprüche 1 bis 3, **dadurch gekennzeichnet, dass** die Zwischenschicht eine sogenannte Zwischenschicht mit "strukturierender" Funktion und derart ist, dass bei einer Windbelastungszeit von 3 s und bei einer Verwendungstemperatur zwischen 0 °C und 20 °C folgendes vorliegt

  - bei 0 °C $E > 8.10^8$ Pa
  - bei 10 °C $E > 3.10^8$ Pa
  - bei 20 °C $E > 1.10^8$ Pa.

5. Herstellungsverfahren nach einem der Ansprüche 1 bis 3, **dadurch gekennzeichnet, dass** die Zwischenschicht eine sogenannte Zwischenschicht mit "Standard"-Funktion und derart ist, dass bei einer Windbelastungszeit von 3 s und bei einer Verwendungstemperatur zwischen 0 °C und 20 °C folgendes vorliegt

  - bei 0 °C $E > 1.10^8$ Pa und $E \leq 8.10^8$ Pa
  - bei 10 °C $E > 2.10^7$ Pa und $E \leq 3.10^8$ Pa
  - bei 20 °C $E > 5.10^6$ Pa und $E \leq 1.10^8$ Pa.

6. Herstellungsverfahren nach einem der Ansprüche 1 bis 3, **dadurch gekennzeichnet, dass** die Zwischenschicht eine sogenannte Zwischenschicht mit "flexibler oder akustischer" Funktion und derart ist, dass bei einer Windbelastungszeit von 3 s und bei einer Verwendungstemperatur zwischen 0 °C und 20 °C folgendes vorliegt

  - bei 0 °C $E > 1.10^7$ Pa und $E \leq 1.10^8$ Pa
  - bei 10 °C $E > 3.10^6$ Pa und $E \leq 2.10^7$ Pa
  - bei 20 °C $E > 5.10^5$ Pa und $E \leq 5.10^6$ Pa.

**Claims**

1. A process for manufacturing a laminated glazing, in which a lamination interlayer is interposed between two substrates having a glass function, **characterized in that**, beforehand:

    - a measurement of the Young's modulus E is made on a sample of said interlayer, using a viscoanalyzer, by varying the temperature and the frequency while imposing a constant dynamic displacement;
    - a numerical treatment of the curves obtained is made, using the WLF (Williams-Landel-Ferry) equations, in order to establish a law governing the behavior of the material constituting said interlayer sample at a given temperature;
    - a numerical model based on a finite-element method in bending of a laminated glazing panel is produced, wherein the mechanical properties of the sample result from the preceding steps;
    - the results of the numerical calculation are compared with those obtained with analytical formulae in which the participation of the interlayer in transferring the shear in the laminated glazing is represented by a transfer coefficient $\omega$;
    - the transfer coefficient $\omega$ is varied in the analytical formulae until the results converge;
    - a transfer function $\omega = f(E)$, where $\omega$ is the transfer coefficient and E is the Young's modulus of the interlayer, is constructed by successive iterations.

2. The manufacturing process as claimed in claim 1, **characterized in that** the temperature is varied between -20°C and +60°C.

3. The manufacturing process as claimed in claim 1, **characterized in that** the frequency is varied between $5 \times 10^{-7}$ Hz and $3 \times 10^{-1}$ Hz.

4. The manufacturing process as claimed in any one of claims 1 to 3, **characterized in that** the interlayer is said to have a "structuring" function and is such that, for a wind load time of 3 s and for a use temperature between 0°C and 20°C:

- at 0°C, $E > 8 \times 10^8$ Pa;
- at 10°C, $E > 3 \times 10^8$ Pa;
- at 20°C, $E > 1 \times 10^8$ Pa.

5. The manufacturing process as claimed in any one of claims 1 to 3, **characterized in that** the interlayer is said to have a "standard" function and is such that, for a wind load time of 3 s and for a use temperature between 0°C and 20°C:

- at 0°C, $E > 1 \times 10^8$ Pa and $E \leq 8 \times 10^8$ Pa;
- at 10°C, $E > 2 \times 10^7$ Pa and $E \leq 3 \times 10^8$ Pa;
- at 20°C, $E > 5 \times 10^6$ Pa and $E \leq 1 \times 10^8$ Pa.

6. The manufacturing process as claimed in any one of claims 1 to 3, **characterized in that** the interlayer is said to have a "flexible or acoustic" function and is such that, for a wind load time of 3 s and for a use temperature between 0°C and 20°C:

- at 0°C, $E > 1 \times 10^7$ Pa and $E \leq 1 \times 10^8$ Pa;
- at 10°C, $E > 3 \times 10^6$ Pa and $E \leq 2 \times 10^7$ Pa;
- at 20°C, $E > 5 \times 10^5$ Pa and $E \leq 5 \times 10^6$ Pa.

Figure 1

Figure 2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **FERRY JD.** Viscoelastic properties of materials. Wiley, 1980